# EUROPEAN PATENT APPLICATION

(11) **EP 0 610 623 A1**
(43) Date of publication of application: **17.08.1994**
(21) Application number: 93309125.8
(22) Date of filing: 15.11.1993
(51) Int. Cl.: G06F 1/00

(54) **File locking based on bad disk sectors**

(30) Priority: 22.12.1992 US 994797
(71) Applicant: Hewlett-Packard Company, Palo Alto, California 94304 (US)
(72) Inventor: Signh, Jitendra Kumar, San Jose, California 95120 (US)
(74) Representative: Powell, Stephen David

(57) **Abstract**

A method for locking software programs to a particular disk (306) includes the steps of determinating the bad sectors on the hard disk the software is installed on, comparing this information to the actual bad sectors on the hard disk the software is presently installed on (1310), and if the hard disk (306) is the same, then allowing the software program to execute. This program locking method permits the distribution of trial copies of software programs and limits the risk that the program will be copied to other computers.

## Description

This invention relates to computers and in particular to a method for preventing the unauthorized use of software programs on computers incorporating hard disks.

In the last fifteen years the software market for computers has grown tremendously and along with this growth has come the need for the mass distribution of software programs. As many of the programs developed for personal computers are costly, the prospective buyers want to be able to test the program before they buy it and they want to test the program on their computer in their home or office. Unfortunately software piracy is wide spread and costs the producers and suppliers of software programs millions of dollars annually. So there needs to be a method whereby software can be distributed to prospective purchasers on a trial basis while, at the same time, protecting the rights of the software suppliers.

Prior art methods have been developed to try to protect software however they have not meet with acceptance by both the software suppliers and the users. Some of the prior art methods required additional hardware which increased the cost of the product and made the use of the product inconvenient for the user. Other methods required a special floppy disk to be in a disk drive for the software to work. However, users disliked having to keep track of the floppy disk.

What is needed in the industry is a method for distributing trial software to users that allows the users to conveniently test the software while, at the same time, protecting the interests of the software suppliers.

The present invention provides a method whereby trial versions of software programs can be widely distributed to prospective users while, at the same time, preventing copying or unlimited use of the programs. The users are thus able to test the programs on their particular computer systems and use the programs as they would if they bought the programs.

In a preferred embodiment of the present invention, the user is given an encrypted version of the application program the user requests and an installation program. The installation program further encrypts, renames and loads the application program onto a hard disk in the user's computer system. In addition, the install program creates one or more randomly named files which are also loaded onto the hard disk. Each of the random files contain the location, on the hard disk, of the application program, the other random files and its own disk location. Also, the random files contain information about the number of times the user has executed the application program and information about the bad hard disk sectors on the hard disk the software is stored on.

The installation program also creates a trial program that is given the name of the application program before the application program was renamed. This trial program is the program the user executes when the user wants to run the application program. The trial program tests to see if the bad hard disk sectors on the hard disk match the bad hard disk sector information in the random files and tests to see if the user has exceeded the permitted number of times the application can be run. If the trial program determines the application program and files are still located on the hard disk they were originally stored on, and the user is still authorized to use the program, then the trial program loads and executes the application program.

The present invention effectively locks the application program to the specific hard disk it is loaded onto. Because the trial program knows where the bad hard disk sectors should be located, any attempt to copy the application program or the random files to another disk will fail as the locations of the bad sectors will change due to the inherent limitations of the manufacturing process used to manufacture hard disks. In the unlikely event that a particular hard disk does not have any bad sectors, the install program will modify the MS-DOS File Allocation Tables (FATs) to artificially mark a cluster as having one or more bad sectors. A data pattern can also then be written to one or more sectors in the cluster to provide a hidden key useful in identifying the particular disk. If a smart hard disk controller has masked the bad sectors so that there are no bad sector entries in the FATs, then the install program issues commands to the smart controller to determine the actual bad sectors of the disk. The actual bad sectors are then used to verify that the software is still located on the original disk the software was installed on.

This new and novel program protection method permits the user to use the application program or data while protecting the rights of the software distributors.

Figure 1A illustrates the MS-DOS directory and the FAT file system.

Figure 1B illustrates the organization of the two FATs and the directory on a simple hard disk.

Figure 2 is a graphical view of the storage area of a simple hard disk.

Figure 3 is a flow chart of steps 1 - 3 of the application program installation method.

Figure 4 is a flow chart of steps 4 - 6 of the application program installation method.

Figure 5 is a flow chart of steps 7 - 9 of the application program installation method.

Figure 6 is a flow chart of steps 10 and 11 of the application program installation method.

Figure 7 is a flow chart of steps 12 - 14 of the application program installation method.

Figure 8 is a flow chart of steps 1 and 2 of the TSR program execution method.

Figure 9A is a detailed flaw chart of the TSR program execution process.

Figure 9B is a continuation of the flow chart shown in Figure 9A.

Figure 10 is an overview flow chart of the application program execution process.

Figure 11A is a detailed flow chart of the application program execution method.

Figure 11B is a continuation of the flow chart shown in Figure 11A.

Figure 12 is a continuation of the flow chart of Figure 11A.

Figure 13 is a flow chart of the Validate program.

Figure 14A is a detailed flow chart of the application program execution method after program rights have been acquired.

Figure 14B is a continuation of the flow chart shown in Figure 11A.

Figure 15 is a flow chart of the Validate program after program rights have been acquired.

This invention makes it possible to lock computer files to the hard disk. The method of the present invention makes it possible to detect whether a software program has been copied to a different disk than it was installed on. The motivation to lock files to a computer disk arises in situations where the unauthorized copying, or use, of a software program or data file needs to be prevented.

An example would be the case of an application software program that is distributed on a trial basis, that is the software can be executed some predefined number of times, there must be some way to prevent the wholesale copying of the software and to prevent the software from being used without limitations. To protect the software developer and distributor, the software program must be locked to a particular hard disk such that the software cannot be copied to another disk and the files containing the number of times the program has been executed must also be protected such that the software program can only be executed the authorized number of times.

Without locking the file containing the count information, it is possible for a user to maintain an original copy of the file (with the trial count set to the maximum count allowed) and copy this on to the hard disk each time he wants to run the application, effectively preventing the trial count information from being decremented.

Locking an application program or data file involves the following process:
a. creating several files with the first one having a fixed name and the other(s) having random names
b. saving the head, cylinder, sector information for each of the files in each of the files together with the count information
c. saving the name of all the files in the first file with the fixed name
d. saving the location of the bad sectors on the hard disk in at least one of the files
e. encrypting all the files
With these operations, if an individual saves the file (containing count information) and then copies it back to the disk prior to executing the trial application, it would be detected by virtue of the fact that the head, cylinder and sector information written into the file would no longer be consistent with the actual head, cylinder and sector occupied by the file due to the inherent operation of MS-DOS. Any scheme used by the user to relocate the file back to the same physical location on the disk will also fail due to there being a set of files with random names. Since the files are randomly generated each time the trial application executes, in most systems with many files, it would be very difficult to identify which set of files were created thereby enhancing the security of the protection method. Also, if an individual loads the software program and files onto a different disk, it would be detected by comparing the bad sectors of the disk to the bad sector information stored in the files. As the bad sectors on a hard disk are unique to that disk, the change of disks would be detected. While the process is described using the example of an application program, the process is equally applicable to protecting data files.

### MS-DOS and Hard Disk File Organization

While the method of the present invention is applicable to many operating systems, a preferred embodiment will be described as it is implemented with the MS-DOS operating system. MS-DOS is also marketed under other brand names. For example, the IBM Personal Computer Disk Operating System (PC-DOS) is, with minor exceptions, a relabeled MS-DOS. The operation of the MS-DOS/PC-DOS (DOS) is well understood by those skilled in the art and the technical features of the operating system are documented in the IBM "Disk Operating System Technical Reference", version 5.00. Additional operating system information is published in "The MS-DOS Encyclopedia", published by Microsoft Press, Redmond, Washington, 1988.

As a feature of the present invention is the locking of the application program and other files to the hard disk, a basic understanding of a hard disk and the file structure of MS-DOS is useful. A hard (fixed) disk typically has multiple disk platters. Each platter is coated with magnetic material and typically one magnetic disk head per platter surface is provided to record data onto, and read data from, the platter surface. Each of the disk heads are mounted on a common arm which is moved in discrete increments to locate the heads on a particular disk cylinder. A cylinder is comprised of all the disk tracks that line up under a head. For example if a disk has two platters and therefore four disk heads, there would be four tracks that make up a cylinder. Each track is divided into sectors with each sector storing multiple bytes of data. The number of sectors is determined when the disk is formatted by a format program.

Allocation of disk space for a file (in the disk data area) is done only when needed. That is, the data space is not preallocated. The space is allocated one cluster (unit of allocation) at a time where a cluster is one or more consecutive disk sectors. The clusters for a file are "chained" together, and kept track of, by entries in a File Allocation Table (FAT).

The clusters are arranged on the disk to minimize the disk head movement. All of the space on a track (or cylinder) is allocated before moving on to the next track. This is accomplished by using the sequential sectors on the lowest-numbered head, then all the sectors on the next head, and so on until all sectors on all heads of the cylinder are used. Then, the next sector to be used will be sector 1 on head 0 of the next cylinder.

For a hard (fixed) disk, the size of the FAT and directory are determined when a disk format program initializes the disk, and are based on the size of the DOS partition. To locate all of the data that is associated with a particular file stored on a hard disk, the starting cluster of the file is obtained from a directory entry, then the FAT table is referenced to locate the next cluster associated with the file. The FAT table is a linked list of clusters such that each 16-bit FAT entry for a file points the next sequential cluster used for that file. The last entry for a file in the FAT has a number which indicates that no more clusters follow. This number can be from FFF8 to FFFF (base 16) inclusive. The size of a cluster is defined when the disk is formatted and can range from 1 to 128 sectors. Each sector of a FAT can point to 256, 512, ..., or 32768 sectors depending of the number of sectors in a cluster. The number of sectors that a FAT sector can point to is called a "track group". For redundancy reasons, two identical FATs are provided on the disk.

When the hard disk is formatted, the format program reads and writes to the entire hard disk storage area to detect bad sectors. The format program prevents the bad disk areas from being used by marking the clusters containing the bad sectors with a FFF7, base 16 (hex), in both FATs. As clusters are chained together to store a file on the disk, the clusters marked bad are bypassed and not used by the operating system.

Because of defects in the magnetic coating material and the application process, a hard disk typically has at least one bad sector and often thirty or more. The higher the capacity of the hard disk, the more platters and therefore the more bad sectors the disk has. Since the defects are random, the resulting bad sector pattern is unique to a particular hard disk. Some hard disks incorporate a "smart" disk controller and IDE and SCSI hard disks are examples of such disks. The smart controllers mask the actual bad sectors from the format program preventing the format program from detecting the bad sectors and marking the FATs appropriately. In operation the smart controllers simply swap a good sector for a bad sector in a process that is transparent to the host computer system. However there are commands built into the smart controllers that will cause the controller to report to the host computer system the actual bad sectors on the hard disk. These commands are published by the hard disk manufactures and are known to those skilled in the art.

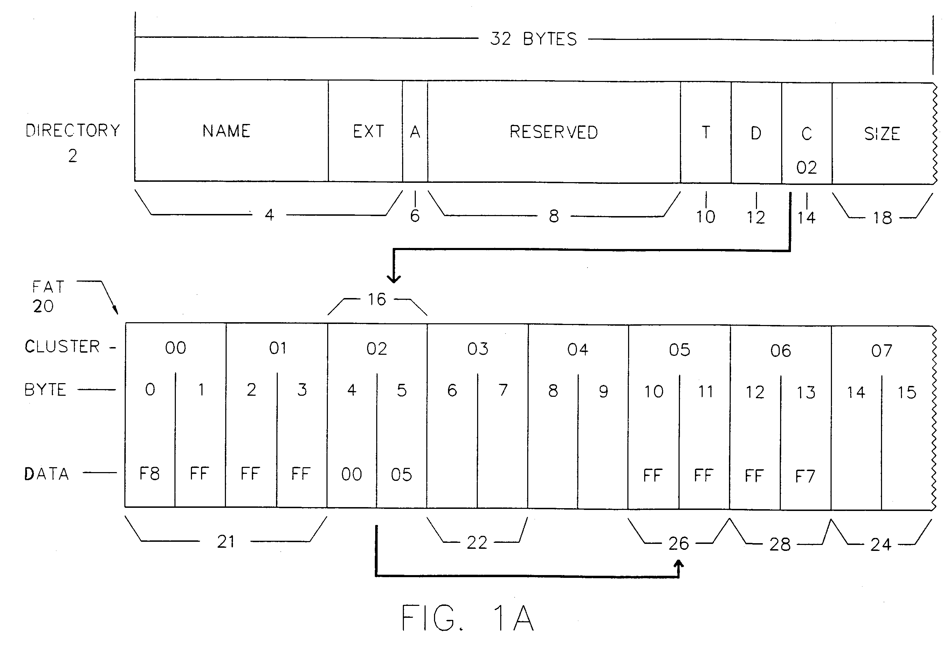

Figure 1A shows a directory entry 2 consisting of 32 bytes of data. The name of the file and its extension is stored in the first 11 bytes of the directory entry 2 and a file attribute byte 6 is provided. By definition, 10 bytes (8) are reserved for future use and 2 bytes are provided to store time (10) and date (12) information. Cluster byte (14) points to the first cluster of sectors used to store the file information and the byte (14) points to the first entry of the FAT table (16) associated with the file. The last 4 bytes (18) of the directory entry (2) is used to store the size of the file.

A 16 byte section of a FAT table (20) is depicted. The first 4 bytes (21) store system information. Bytes 4 and 5 (16) are the beginning bytes of the FAT (20) used to track file information. The first cluster for data space on all disks is cluster "02". Therefore, bytes 4 and 5 (16) are associated with the first cluster of disk sectors "02" used to store file information. FAT bytes 6 and 7 (22) are associated with cluster 03 ... and bytes 14 and 15 (24) are associated with cluster 07.

This example illustrates how sectors associated with a file referenced in the directory are located. The cluster information (14) in the directory (2) points to cluster number "02". The sectors in cluster "02", not shown, contain the first part of the data for the referenced file. Next the FAT table is referenced to see if additional clusters are used to store the file information. FAT bytes 4 and 5 (16) were pointed to by the directory entry (14) and the information stored in bytes 4 and 5 (16) point to the next cluster used for the file. Here the next cluster is "05". So, cluster "05" contains the next part of the data for the referenced file. FAT bytes 10 and 11 (26) contain an end-of-file number "FFFF" indicating there are no more clusters associated with the referenced file. All of the information associated with the referenced file was contained in clusters "02" and "05" on the disk. Bytes 12 and 13 (28), associated with cluster "06", contain the value FFF7 hex indicating that cluster "06" contains a bad sector.

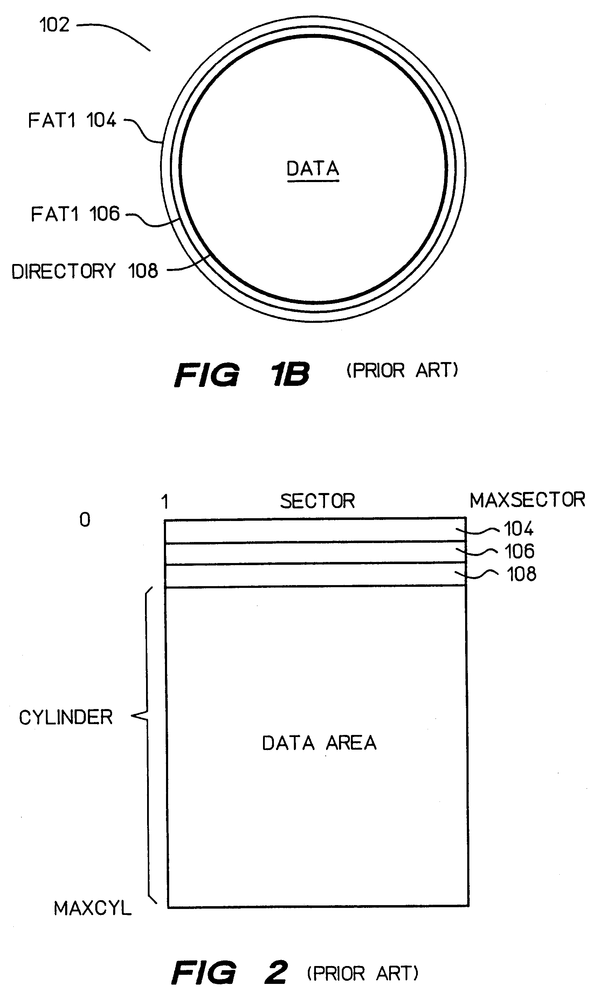

Figure 1B shows a schematic view of the organization of the two FATs and the directory on a simple disk. The disk 102 has an outside track 104 which contains the first FAT information. The next inner track 106 contains the second FAT information. The next sequential track 108, toward the center of the disk, contains the directory information. The most outer track (track 0) of the disk, not shown, is reserved for the storage of the computer boot up instructions.

Figure 2 shows a graphical view of the storage area of the disk in Figure 1. The information for the FATs 104 and 106 is stored in the first and second tracks shown and the information for the directory 108 is stored in the third track shown. The remaining storage area of the disk 202 is available for storing file information. Beginning with track 1, sector 1, the operating system uses up to 128 contiguous sectors for the first copy of the FAT 1 (104). The operating system then allocates an additional, duplicate contiguous space for the FAT 2 (106). After both FATs have been allocated, the operating system allocates the next 32 contiguous sectors for the root directory 108.

The simple disk illustrated in Figure 1 and Figure 2 has a single recording surface and would only have a single recording head. Therefore, a track would be equivalent to a cylinder. Also for simplicity, the directory 108 and the two FATs 104 and 106 are assumed to occupy a single track each.

By following the above example, the absolute sectors used by the operating system to store a particular file on the hard disk can be readily determined. Programmatically, one would use the resources of the Basic Input Output System (BIOS), particularly interrupt 13, to read and write absolute disk sectors. Also as the location of the FATs are known, the FATs can be read by using the interrupt 13 BIOS call to determine which clusters have bad sectors. Knowing the size of a cluster and the location of the start of a cluster of sectors on the hard disk, additional interrupt 13 calls can be used to locate the individual bad sectors in the cluster.

### Application Program Installation

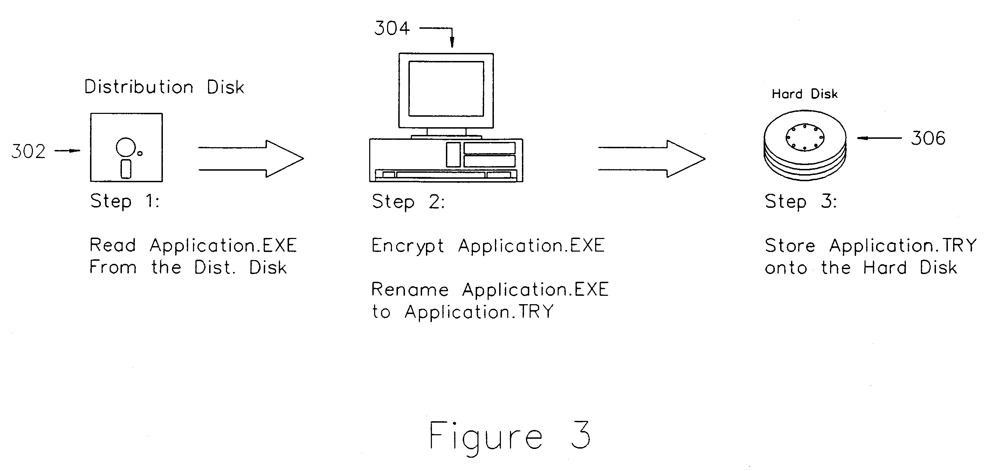

Figure 3 illustrates the first three steps of the application program installation method. In step 1, the user is supplied with a distribution disk 302 which contains an encrypted copy of the application program and other files. The disk 302 can be any means of software distribution such as a floppy disk, an optical disk or file server connected to the user's computer by a network or telephone. A computer 304 reads the application program from the distribution disk 302.

In step 2, the application program, "Application.EXE", is encrypted and renamed to "Application.TRY". Any encryption algorithm can be used to encrypt the application program. A simple method is to invert the bits in all or some of the bytes of data that make up the application program. More elaborate encryption algorithms such as the Data Encryption System (DES) can also be used. The more secure the encryption algorithm used, the more difficult it is to break the software protection method. Renaming a file is performed by using the MS-DOS "REN" command or other methods known to one skilled in the art.

In step 3, the encrypted and renamed application, Application.TRY, is stored onto a hard disk 306 which is part of the computer 304.

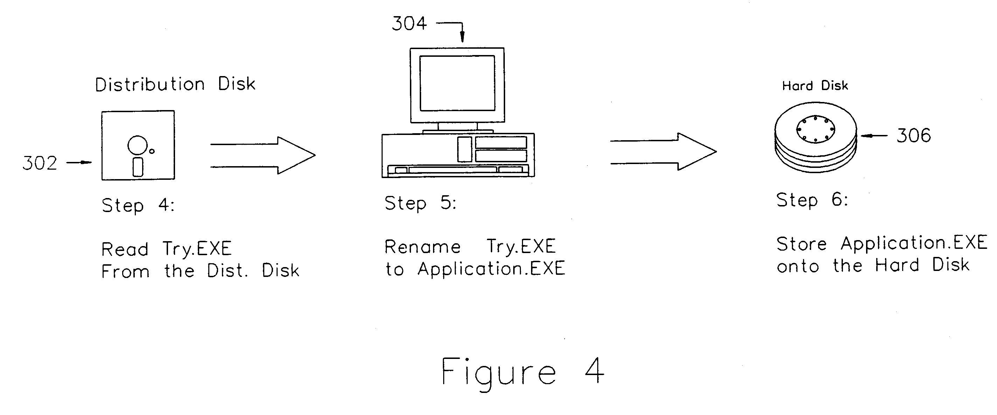

Figure 4 illustrates steps 4 - 6 of the application program installation method. Step 4 entails reading the program Try.EXE from the distribution disk 302. The Try.EXE program is the program the user will execute to run the application program. Also, the Try.EXE program checks files on the hard disk 306 to verify the files have not been tampered with.

The program Try.EXE is renamed to Application.EXE in Step 5. This renaming is performed so that the Try program executes when the user wants to execute the application program. The Try program will execute the application program after performing verification tests. After the Try program is renamed, it is stored on the hard disk 306, in step 6, as Application.EXE.

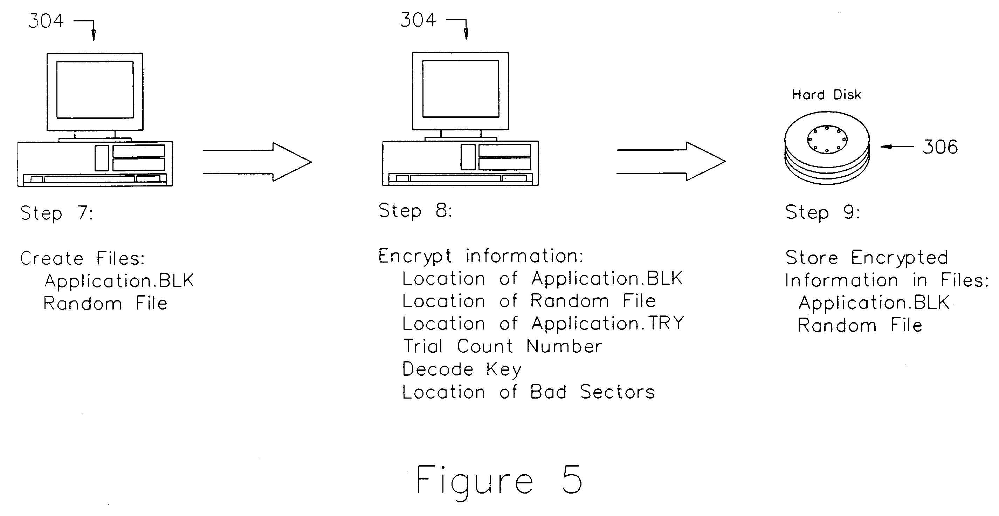

Figure 5 illustrates steps 7 - 9 of the application program installation method. The computer 304 creates two files, Application.BLK and Random on the hard disk in step 7. Step 8 entails the encryption of the absolute disk location of the Application.BLK, Random, and the Application.TRY files along with a trial count number, a decode key and the bad sector information for the hard disk. The trial count number is the number of times the application program is permitted to be executed. The decode key is used to decode the encrypted application program and can be a simple key as would be used to restore inverted bits or a complex multi-byte key. The bad hard disk sectors are determined and this information is used later in the verify operation. Should the hard disk not have any clusters marked bad in the FATs, the installation program will mark unallocated clusters in the FATs as bad and store a data pattern in one or more sectors that make up the clusters to identify the hard disk later in the verify process. If the hard disk has a "smart" controller that masks bad sectors from the format program, thereby causing no bad sectors to be recorded in the FATs, the installation program issues commands directly to the disk controller to determine the actual hard disk bad sectors and uses this information in place of the FAT information. In step 9, the encrypted information from step 8 is stored in the two files Application.BLK and Random.

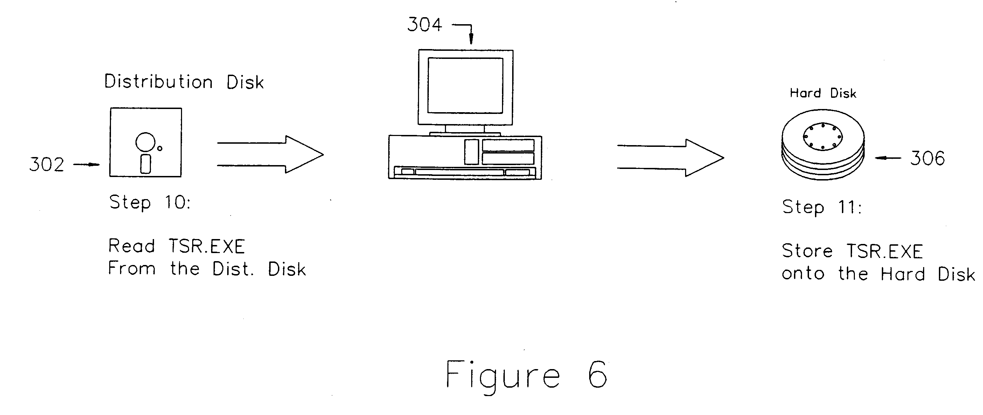

Figure 6 illustrates steps 10 - 11 of the application program installation method. The distribution disk 302 contains a Terminate and Stay Resident (TSR) program, TSR.EXE, and this file is read into the computer 304 in step 10. The TSR program monitors MS-DOS disk commands to determine if the encrypted program, Application.try, is being read into the memory of the computer 304. The TSR.EXE program is stored onto the hard disk 306 in step 11.

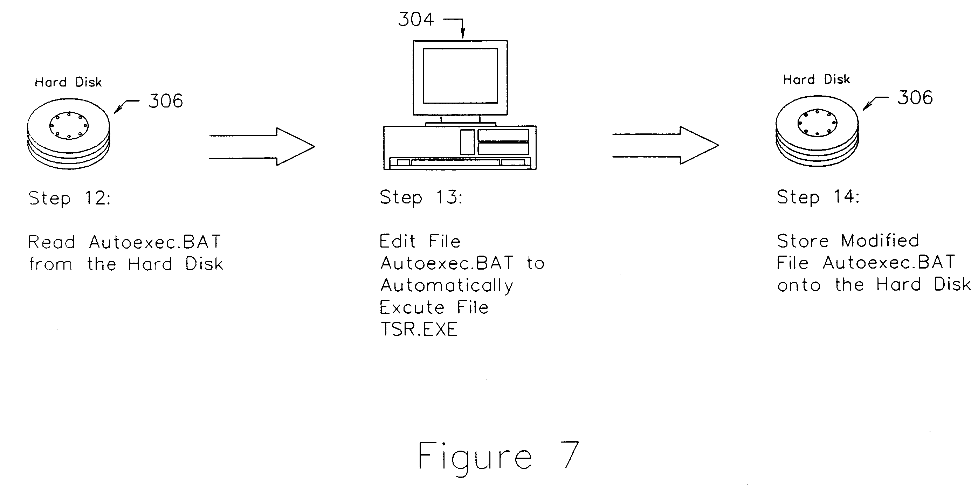

Figure 7 illustrates steps 12 - 14 of the application program installation method. In step 12, the MS-DOS program Autoexec.BAT is read from the hard disk 306. The Autoexec.BAT program is edited to insert a command to execute the program TSR.EXE in step 13. Since Autoexec.BAT is automatically executed when the computer 304 is turned on, the TSR program will be executed and remain resident in the computer memory where it will monitor disk activity. The edited Autoexec.BAT program is stored onto the hard disk 306 in step 14.

### TSR Program Installation and Function

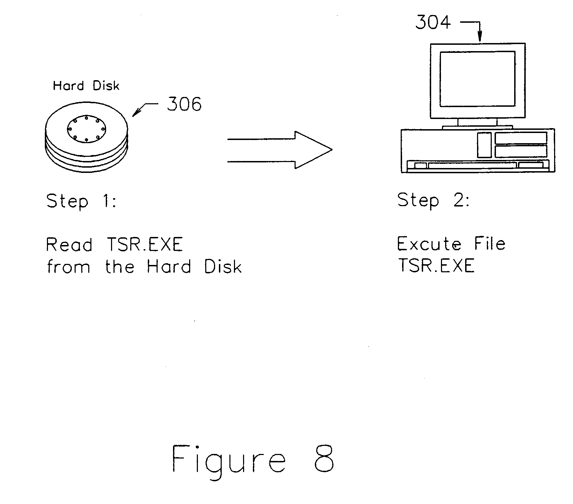

Figure 8 illustrates steps 1 and 2 of the TSR program installation method. When the computer 304 is turned on (booted), the Autoexec.BAT program is automatically run. The Autoexec program is a batch program that contains a list of commands that the computer performs when it is booted. One of the commands is the command to execute the TSR.EXE program. In step 1, the computer 304 reads the TSR.EXE program from the hard disk 306 where it was previously stored. Then, the computer executes the TSR program in step 2. The TSR program is installed in the interrupt 13 chain. This installation is performed by replacing the address at the interrupt 13 location with the memory address of the TSR program. The old interrupt 13 address is stored for future use by the TSR program. Now, any program that issues an interrupt 13 request (a request for disk service) will automatically transfer control to the TSR program. The TSR program will monitor all interrupt 13 (Int.13) requests and, in particular, those that are for loading the sectors containing the encrypted sectors of the application program (Application.TRY).

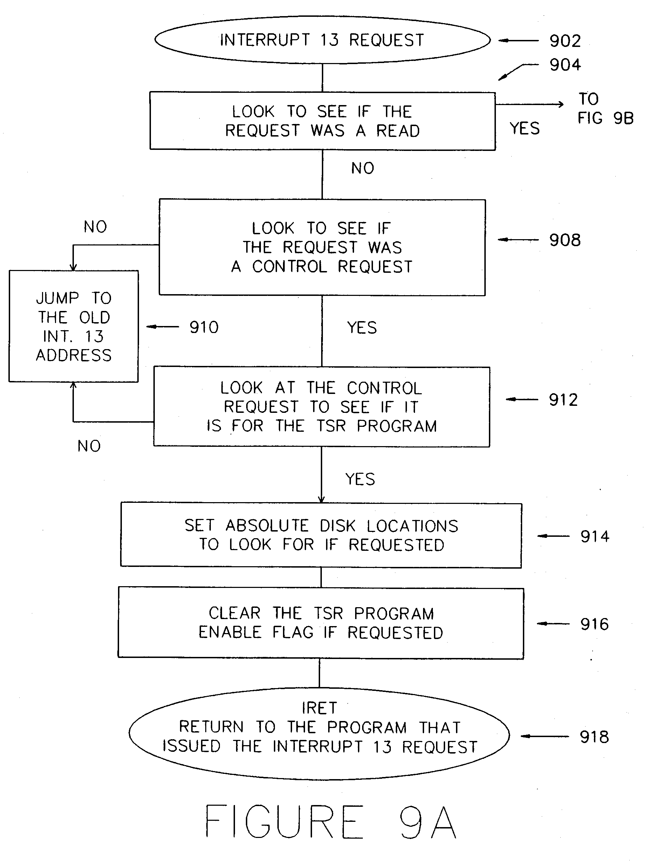

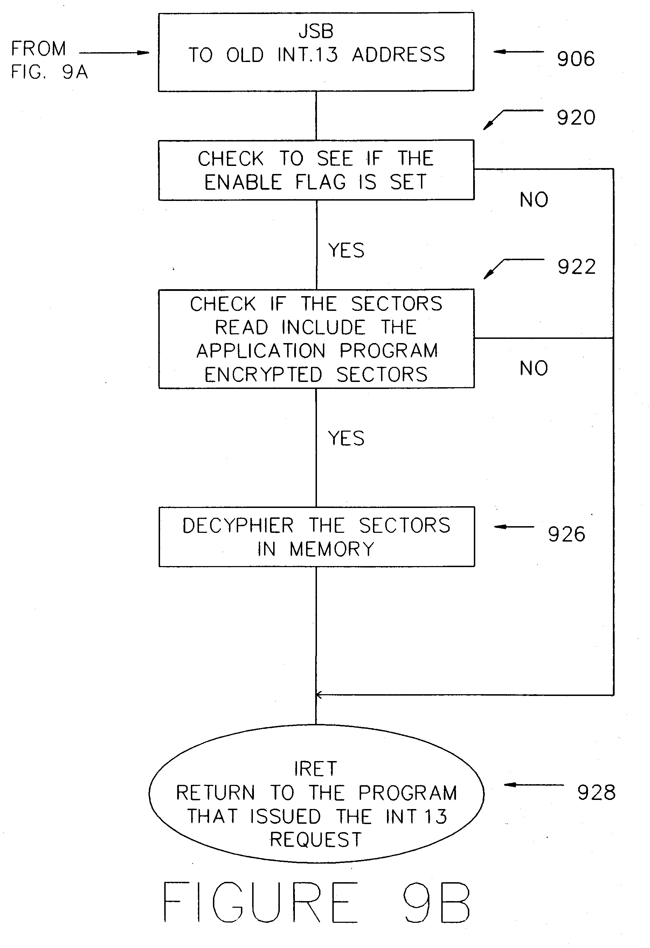

Figures 9A and 9B show a flow chart for the TSR.EXE program. The TSR process starts when an Int.13 request is issued 902. The next step 904 is to see if the Int.13 request is a read request. If it is a read request, then the process shown in Figure 9B, starting with block 906, is performed. If the Int.13 request is not a read request, then see if the request is a control request 908. If the request is not a control request, then the TSR program does not need to perform any function and control is transferred to the program located at the old Int.13 address 910. If a control request was issued, then check to see if the control request is for the TSR program 912. If the control request is not for the TSR program, then the TSR program does not need to perform any function and control is transferred to the program located at the old Int.13 address 910.

If the control request is for the TSR program, then the TSR program performs one of two functions 914 or 916. In block 914, the TSR program stores the absolute disk location of the sectors used to store the Application.TRY program. By storing the location of the encrypted disk sectors, the TSR program can examine a disk read request to determine if one or more of the sectors that stores the application program has been requested. The TSR also maintains an enable flag. If the flag is enabled, then the TSR program will decode encrypted disk sectors that have been read into memory. However, if the flag is "cleared", then the TSR program is effectively disabled. One of the control requests that the TSR will perform is to clear the flag 916. After any control requests have been performed, the TSR performs a IRET command 918 which returns control to the program that issued the Int.13 request.

If the Int.13 request is a read request, then the process depicted in Figure 9B is performed. In block 906, a jump to subroutine (JSB) is performed to the old Int.13 address. This causes the program at the old Int.13 address to perform its function, typically this program reads the disk sectors, and then returns control back to the TSR program. After control is returned to the TSR program, the TSR program checks to see if the enable flag is set 920 and checks to see if the sectors read include sectors containing the application program 922. If the flag is not set or the sectors do not contain the application program, then the TSR program performs an IRET command 928 which transfers control back to the program that issued the Int.13 request.

After all the checks have been completed, the TSR program now deciphers the disk sectors 926, containing the encrypted application program, that have been read into memory. The TSR program uses the key passed to it by a Int.13 control request to decipher the sectors. Depending on the encryption method used, the key can be simple or very complex. After the sectors have been deciphered, the TSR program performs an IRET command 928 to return control back to the program that issued the Int.13 request.

### Application program execution

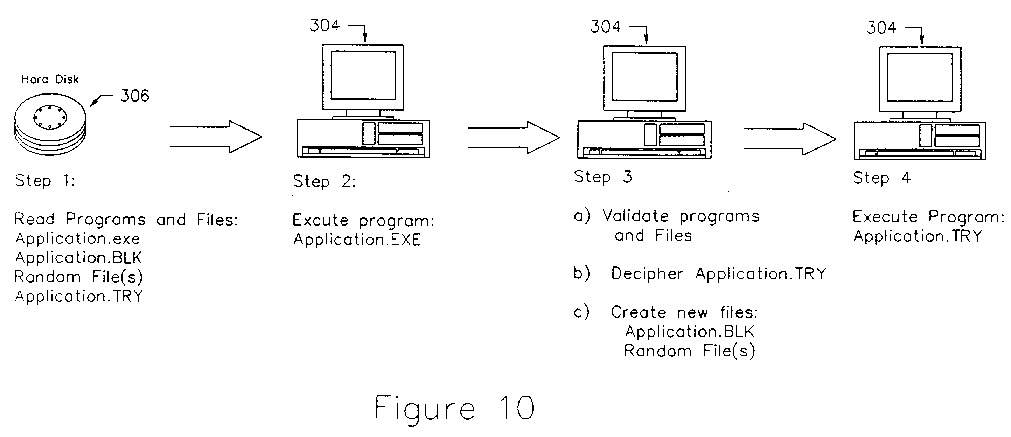

Figure 10 illustrates the basic functions that occur when the application program is executed. In step 1, the programs Application.EXE and Application.TRY, and the files Application.BLK and the Random file(s), are read from the hard disk 306. The Application.EXE program is executed in step 2. In step 3, the Application.EXE program validates the Application.TRY program, the Application.BLK file and the Random file(s). If the program and files are validated, then the Application.EXE program causes the Application.TRY program to be deciphered and creates a new Application.BLK file and new randomly named files. Then in step 4, the Application.TRY program is executed and the user can use the application program.

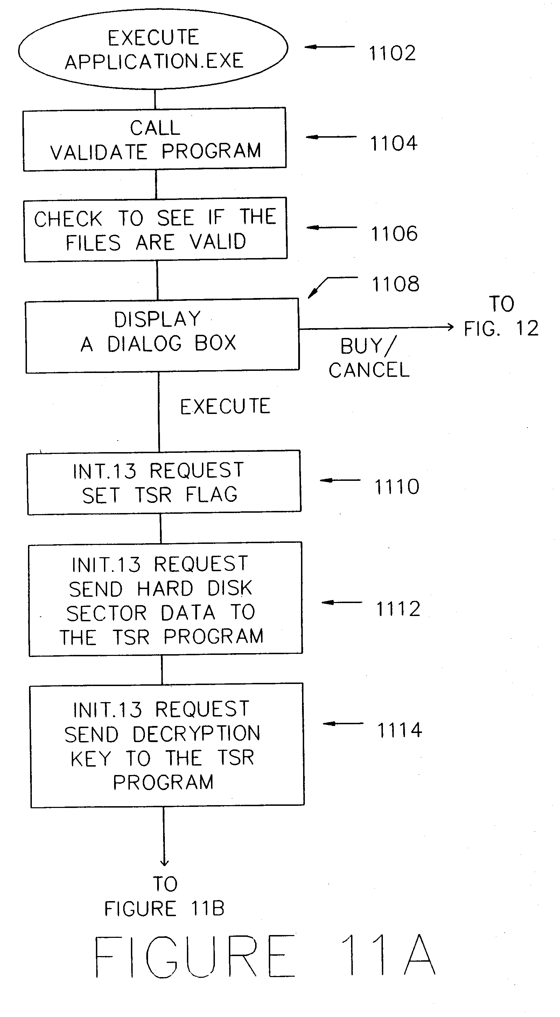

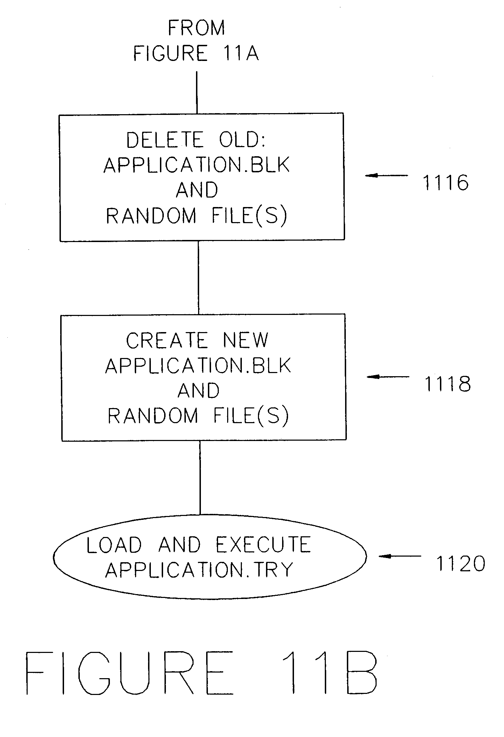

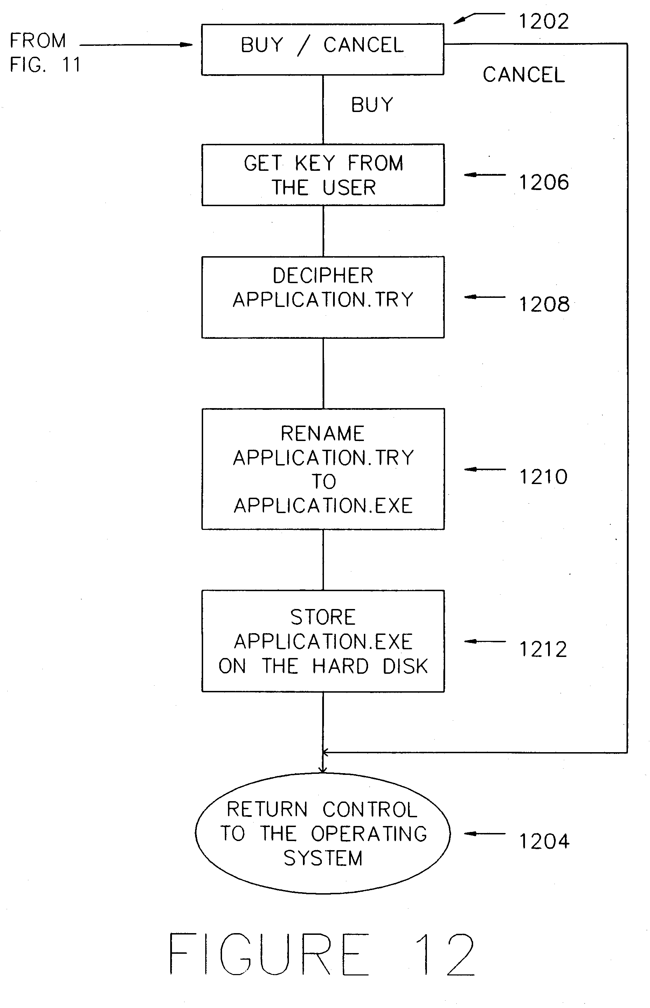

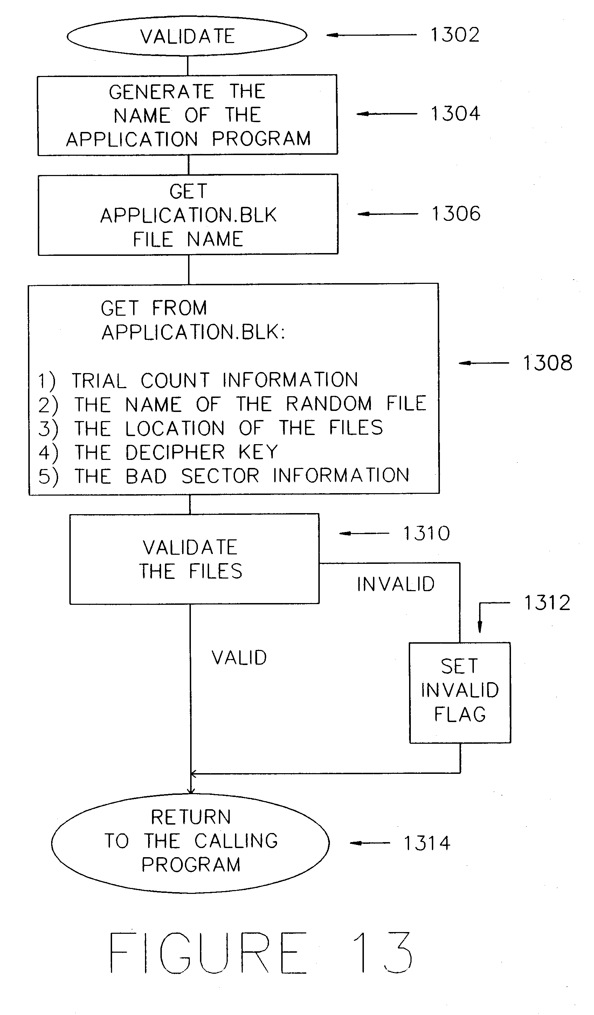

Figures 11A, 11B and 12 illustrate a detailed flow chart for the execution of the application program. After the TSR program has been loaded and executed, described above, the user causes the program Application.EXE to execute. As previously described, the program Application.EXE is the former Try.EXE program. When Application.EXE is executed 1102, the program "Validate" is called 1104. The Validate program checks to see if the user is authorized to run the application program. A flow chart for the validate program is shown in Figure 13. A validation flag is returned by the Validate program. Application.EXE checks the validation flag to determine whether the user will be allowed to execute the application program.

After the validation process, the Application.EXE program displays, on the user's computer 304, a dialog box 1108. This dialog box gives the user three choices:
1. To buy the program
2. To cancel the request to execute the application
3. To execute the application program
If the validation flag is set (some violation was detected), then the user can only buy the program or cancel the request. The user selecting the execute option causes the Application.EXE program to issue Int.13 requests. The first Int.13 request 1110 sets the flag in the TSR program. This is accomplished by sending the TSR program a control request causing the TSR flag to be set and enabling the TSR program to decipher encrypted hard disk sectors. A second Int.13 request 1112 passes, to the TSR program, the absolute location on the hard disk of the sectors used to store the application program. The third Init.13 request sends, to the TSR program, a key used by the TSR program to decipher the encrypted disk sectors.

The Application.EXE program deletes the Application.BLK and the Random file(s) from the hard disk 1116 and creates new files 1118. This process is essentially the same as process described in conjunction with Figure 5, steps 7 - 9. However, the trial count number is decremented by one from the previous value to reflect the current execution of the application program.

Now the Application.EXE program causes the operating system to load and execute the Application.TRY program 1120 thereby running the application program. During the process of loading the Application.TRY program, an Int.13 request will be issued thereby causing the TSR program to decipher the necessary hard disk sectors that are loaded into the memory of the computer 304.

If the validation flag was set or if the user selected the buy or cancel options displayed by the dialog box, then the process illustrated in Figure 12 is performed. At the buy/cancel option point 1202, if the user selects cancel, then the Application.EXE program terminates and transfers control back to the operating system 1204. The user may wish to select the cancel option if the number of times the user can still execute the application program is small and the current task is not very important.

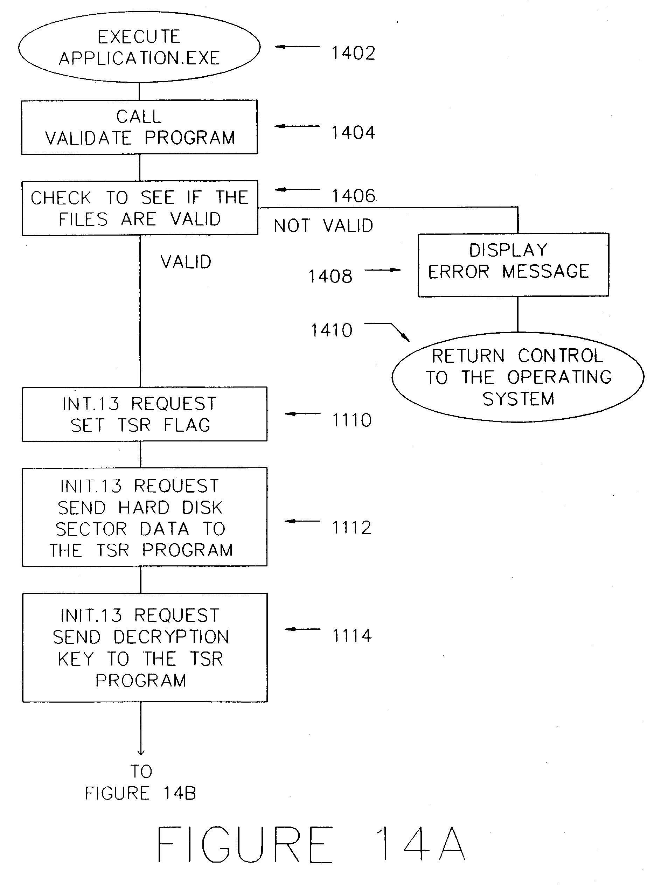

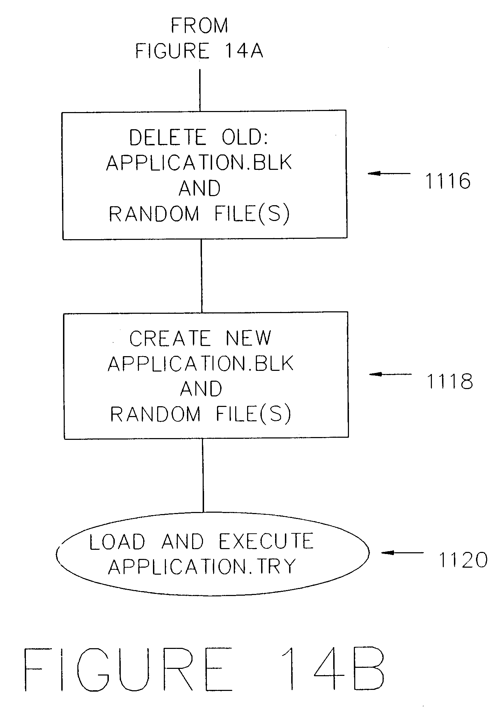

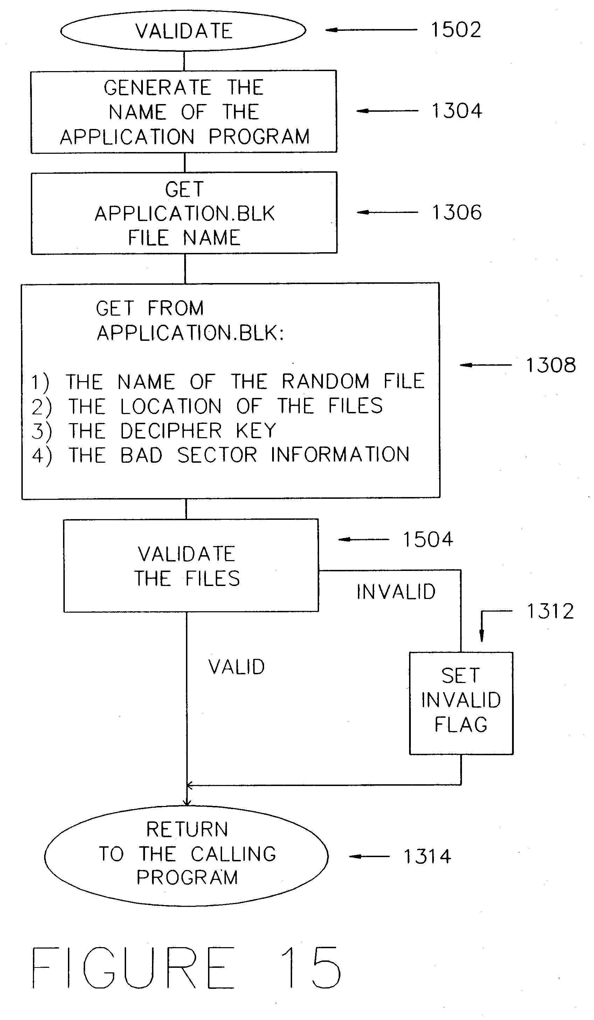

If the buy option is selected, then the user is prompted to input a key 1206. Typically if the user selected the buy option, a second dialog box (not shown) would be displayed giving the user the telephone number of the software vendor to call. The user would then receive the required key by purchasing the program over the telephone from the software vendor. After verifying the key 1208, by comparing the key entered by the uses with a prestored master key for example, the Application.EXE and the Verify programs are modified. The Validate program is modified to remove the trial count test 1210, and the Application.EXE program is modified to remove the dialog box 1212. The flow charts for the modified Application.EXE and Validate programs are illustrated in Figures 14 A+B and 15 respectively. At this point, the application program can be executed an unlimited number of times but cannot be copied to a different hard disk.

Figure 13 illustrates a flow chart for the Validate program which is called by the Application.EXE program to verify the integrity of the application locking method. After the Validate program is called 1302, the name of the application program is generated 1304. Since the validate program may be called to verify a number of application programs, this name generation step is required to determine which application program to check. The name of the program calling the verify program is used to generate the application program name. For example, the Application.EXE program might really be named "Wordperfect.EXE" and therefore the verify program will know to examine the files related to the Wordperfect application program. By knowing the name of the application program the verify program will determine the Application.BLK file name 1306. In the above example, the Application.BLK will really be named Wordperfect.BLK.

The Validate program extracts from the Application.BLK file the trial count information, the name of the random file(s) associated with the application, the locations of the files and a decipher key 1308. This information is encrypted in the Application.BLK and the Random files and must be deciphered according to the cipher method used. To extract the information from the random file(s), the Validate program deciphers the random file(s) using the decipher key extracted from the Application.BLK file. The Validate program also extracts from the Random file(s), the hard disk bad sector data.

The Validate program now checks to see if the user is permitted to execute the application program 1310. If there are no more permitted runs of the application program available, the validate flag is set 1312 and the Validate program returns control to the calling program 1314. The locations of all the files associated with the application program are also checked to see if any of the files have been moved. If one or more files have moved, then the invalid flag is set 1312 and the Validate program returns control to the calling program 1314. The Validate program also checks to see in the bad sector information extracted from the files matches the actual bad sectors of the hard disk the program and files are stored on. This is performed by looking at the FATs and testing the sectors in the clusters marked bad or by retrieving the bad sector information from a smart controller as appropriate. If the bad sector information does not match, the invalid flag is set 1312 and the Validate program returns control to the calling program 1314. Should the trial count, file names and locations, hard disk bad sectors and the decipher process all verify the user can execute the application program, the Validate program does not set the invalid flag and returns control to the calling program 1314.

Figures 14A and 14B illustrate the flow chart for the Application.EXE program after the program has been modified when the user purchased the right to use the application program an unlimited number of times. The flow chart is essentially the same as described in association with Figures 11A and 11B with the following changes. When the Application.EXE program is executed 1402, the modified Validate program 1502 is called 1404. The Validate program tests to see if the application program or files have been moved from the hard disk they were installed on. Then the program Application.EXE tests to see if the Verify program returned a valid flag 1406. If the invalid flag is set, then an error message is displayed on the computer screen 1408 and then control is returned to the operating system 1410 and the application program is not executed. If the invalid flag is not set, then an INT.13 request is made to set the TSR flag 1110. After step 1110, the execution of the Application.EXE program continues as described in association with Figures 11A and 11B.

Figure 15 illustrates the flow chart for the modified Validate program 1502. The Validate program is essentially the same as described in association with Figure 13 but was modified to eliminate the test for trial count when the user purchased the rights to execute the application program an unlimited number of times. Therefore step 1504 performs the same function as step 1310, described in association with Figure 13, except that the trial count is ignored. As such, the application program can be executed an unlimited number of times as long as the application program and files are located on the hard disk they were originally installed on and the files are located on the hard disk where the Install program or Application.EXE program stored them.

### Conclusion

By using a preexisting unique disk identifier, software loaded onto the disk can be protected from unauthorized use without the need to add additional hardware. This method will work with any storage means having a substantially unique characteristic, such as a detectable defect, which can be ascertained by appropriate software. Also, while a particular embodiment of this invention has been described, it will be obvious to one skilled in the art that modifications to this method can be made while still enjoying the benefits of this invention.

For example, instead of relying just on the actual bad sectors of the hard disk to detect copying of the software to another hard disk, additional clusters can be marked bad in the FATs and encoded data stored on the disk in the sectors that make up the cluster. Also, the hard disk bad sectors can be used as the sole method of preventing copying of any software program or file. The above example is intended to illustrate one embodiment of the present invention and is not to be viewed as a limitation of the scope of this invention which is defined solely by the following claims.

## Claims

1. A method for locking software (Fig.3 : STEP 1), to a specific magnetic disk (306) having bad sectors, comprising the steps of:
a) detecting a location of a magnetic disk bad sector at a first point in time (Fig.5 STEP 8); and
b) detecting the current location of the magnetic disk bad sector (1310) and allowing use of the software (1108) when the location of the magnetic disk bad sector detected at the first point in time matches the current location of the magnetic disk bad sector.

2. A method as in claim 1 further comprising the steps of:
a) storing the location of the magnetic disk bad sector, detected at the first point in time (Fig.5: STEP 8) in a storage device (306); and
b) recalling the stored location (1308) from the storage device (306) and using the recalled location to match against the current location of the magnetic disk bad sector (1310).

3. A method as in claim 2 further comprising the steps of:
a) encrypting the location of the magnetic disk bad sector (Fig.5 STEP 8) and storing the encrypted location in the storage device (306); and
b) decoding the recalled location (1308) before the recalled location is matched against the current location of the magnetic disk bad sector.

4. A method for locking software (Fig.3 STEP 1), to a specific magnetic disk (306) having sectors, comprising the steps of:
a) marking a sector, having a location, as bad; and
b) detecting if the sector is currently marked as bad (1310) and allowing use of the software if the sector is currently marked as bad.

5. A method as in claim 4 further comprising the steps of:
a) storing the location of the marked bad sector in a storage device (306); and
b) recalling the stored location (1308) from the storage device (306) and using the recalled location (1310) of the marked bad sector to identify the specific sector marked as bad.

6. A method as in claim 4 further comprising the steps of:
a) storing data in the sector marked as bad;
b) recalling data currently stored in the sector (1308); and
c) comparing the stored data with the recalled data (1310) and allowing use of the software when the stored data and recalled data match.

7. A method for locking software (Fig.3: STEP 1) to a storage device (306) having a substantially unique characteristic, comprising the steps of:
a) detecting a unique characteristic of the storage device (Fig.5: STEP 8) at a first point in time; and
b) comparing the unique characteristic of the storage device with the current characteristics of the current storage device (1310) and allowing use of the software when the current characteristics of the current storage device include the unique characteristic of the storage device.

8. A method as in claim 7 further comprising the steps of:
a) storing information identifying the unique characteristic in a storage device (Fig.5: STEP 9); and
b) recalling the stored information from the storage device (1308) and using the recalled information to determine if the current characteristics of the current storage device include the unique characteristic (1310).

9. A method as in claim 8 further comprising the steps of:
a) encrypting the information identifying the unique characteristic (Fig.5: STEP 8) and storing the encrypted information (Fig.5 : STEP 9) in the storage device (306); and
b) decoding the information recalled from the storage device and using the decoded information to determine if the current characteristics of the current storage device include the unique characteristic (1310).
